# EUROPEAN PATENT SPECIFICATION

(11) **EP 2 591 672 B1**
(45) Date of publication and mention of the grant of the patent: **27.04.2016**
(21) Application number: 11188553.9
(22) Date of filing: 10.11.2011
(51) Int. Cl.: A01N 37/40, A01N 41/10, A01N 43/50, A01N 47/36, A01P 13/00

(54) **HERBICIDAL COMPOSITION AND METHOD OF USING THE SAME**
HERBIZIDZUSAMMENSETZUNG UND VERWENDUNGSVERFAHREN DAFÜR
COMPOSITION HERBICIDE ET PROCÉDÉ D'UTILISATION

(43) Date of publication of application: 15.05.2013
(60) Divisional application: 13193957.1
(73) Proprietor: Rotam Agrochem International Co., Ltd, Chai Wan, Hong Kong (CN)
(72) Inventor: Bristow, James, Timothy, Chai Wan, Hong Kong (CN)
(74) Representative: Akers, Noel James

(56) References cited:
- WO-A1-02/100173
- CN-A- 101 953 354
- DE-A1- 19 919 853
- US-A1- 2011 053 773
- US-B1- 6 486 096

## Description

### FIELD OF INVENTION

The invention relates to an herbicidal composition for weed control, particularly in maize (corn), wherein the herbicidal composition comprises mesotrione or a salt thereof and at least one second herbicidal agent which is (a) imazaquin or a salt thereof and optionally (b) nicosulfuron and/or dicamba or salts thereof. The invention also relates to a method of using the composition for controlling undesirable vegetation in crops, particularly in maize.

### BACKGROUND OF THE INVENTION

The control of undesired vegetation is extremely important in achieving high crop yield. Achievement of selective control of the growth of weeds especially in such useful crops as rice, soybean, sugar beet, corn (maize), potato, wheat, barley, tomato and plantation crops such as sugar cane, among others, is very desirable. Unchecked weed growth in such useful crops can cause significant reduction in productivity and thereby result in increased costs to consumers. Protection of crops from weeds and other vegetation that inhibits crops growth is a constantly recurring problem in agriculture. To help combat this problem, researchers in the field of synthetic chemistry have produced an extensive variety of chemicals and chemical formulations effective in controlling of such unwanted growth. Many types of herbicides have been disclosed in the literatures and a large number are in commercial use. In some cases, herbicidal active ingredients have been shown to be more effective in combination than when applied individually, and this is referred to as "synergism". "Synergism" is an interaction of two or more factors such that the effect when combined is greater than the predicted effect based on the response to each factor applied separately. Combinations of herbicides are typically used to broaden the spectrum of plant control or enhance the control of any given species through additive effect. Furthermore, certain rare combinations unexpectedly give a greater-than-additive or synergistic effect on weeds or a less-than-additive or safening effect on crops.

Patent application WO 2002/100173 discloses a composition comprising mesotrione and a second herbicide selected from triazines, thiazolinones, imidazolinones, dicamba, flumetsulam, trifloxysulfuron, tritosulfuron, triasulfuron, pyriftalid, prosulfocarb, pretilachlor, and cinosulfuron. The specification did not provide field test data and efficacy for controlling undesirable vegetation, particularly in crops.

CN1326455 describes a process of controlling triazine-tolerant weeds by the application of a combination of mesotrione and a triazine to the locus of said weeds.

CN 101953354 describes a compound herbicide composition which comprises mesotrione, dicamba and diflufenzopyr. The compound herbicide composition has higher weeding effect than a single preparation, a very high synergistic effect, reduces medicament dosage, decreases medicament cost of farmers, and delays the generation and development of resistance to the single preparation.

A method of improving the nutritional value of plants, in particular the direct or indirect improvement of levels of key phytonutrients and/or the stress tolerance of the plant, is disclosed in US2011/0053773. Herbicidal compositions comprising certain acylated aminophenylsulfonylureas are disclosed in US6,486,096. The present invention is based on the discovery that mesotrione and certain other herbicides display a synergistic effect when applied in combination. The combination of the present invention is new and has not been reported.

### SUMMARY OF THE INVENTION

The present invention relates to a composition which provides improved herbicidal properties, for example, improved biological properties, and/or synergistic properties, especially for controlling undesirable vegetation, particularly in crops.

Accordingly, in a first aspect, the present invention provides an herbicidal composition comprising mesotrione or a salt thereof and at least one second herbicidal agent, wherein the second herbicidal agent is (a) imazaquin or a salt thereof and optionally (b) nicosulfuron and/or dicamba or salts thereof. According to the present invention, the combinations of mesotrione and nicosulfuron, mesotrione and dicamba are excluded. Optionally, the herbicidal composition of the present invention may further comprise an agriculturally acceptable adjuvant and/or carrier. For example, the adjuvant and/or carrier may include one or more selected from the group consisting of surfactants, safeners, solvents, solid diluents and liquid diluents.

The present invention also includes embodiments in which one or further active ingredient is included, in addition to the components mesotrione and the second herbicidal agent. In another aspect, this invention provides a method of controlling growth of undesirable vegetation in crops, particularly maize (corn), comprising applying to the locus of the undesirable vegetation, an herbicidally effective amount of mesotrione and at least one second herbicidal agent selected from the group consisting of nicosulfuron, dicamba, imazaquin, their salts and any combination thereof. The combinations of mesotrione and nicosulfuron, mesotrione and dicamba are excluded. Preferably, the herbicidal composition of the present invention may further comprise an agriculturally acceptable adjuvant and/or carrier. For example, the adjuvant and/or carrier may include one or more selected from the group consisting of surfactants, safeners, solvents, solid diluents and liquid diluents.

Accordingly, in a third aspect, the present invention provides a method of protecting a plant against undesirable vegetation in crops by applying to the plant a product comprising a composition as hereinbefore defined.

### DESCRIPTION OF THE PREFERRED EMBODIMENTS

It has been surprisingly found that the combination of mesotrione or a salt thereof and at least one second herbicidal agent, wherein the second herbicidal agent is (a) imazaquin or a salt thereof and optionally (b) nicosulfuron and/or dicamba or salts thereof, results in unexpectedly enhanced action in controlling undesirable vegetation in crops. In particular, the combination exhibits surprisingly high activity in controlling undesirable vegetation in maize.

In one aspect, the present invention provides an herbicidal composition comprising an herbicidally effective amount of mesotrione or a salt thereof and at least one second herbicidal agent, wherein the second herbicidal agent is (a) imazaquin or a salt thereof and optionally (b) nicosulfuron and/or dicamba or salts thereof. The combinations of mesotrione and nicosulfuron, mesotrione and dicamba are excluded.

Mesotrione is commercially available in herbicidal compositions sold by Syngenta (e.g. CALLISTO® Herbicide). Although mesotrione is most conveniently obtained as a commercial product, it can be prepared as described in U.S. Patent 5,006,158, while its salts or metal chelates can be prepared as described in U.S. Patent 5,912,207. The formula of mesotrione is as below:

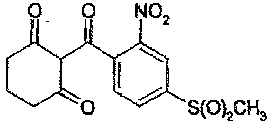

Nicosulfuron (2-(4,6-dimethoxypyrimidin-2-ylcarbamoylsulfamoyl)-N,N-dimethyl-nico tinamide), disclosed in U.S. Patent 4,789,393, is a herbicide for selective post-emergence control of annual grass weeds, broad-leaved weeds and perennials in maize. The structure of nicosulfuron is as below:

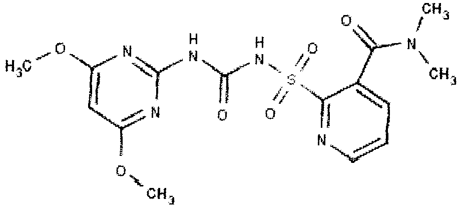

Dicamba (3,6-dichloro-o-anisic acid), was first disclosed in U.S. Patent 3,013,054 as a selective systemic herbicide for control of annual and perennial broad-leaved weeds and brush species in cereals, maize, sorghum, sugar cane, asparagus, perennial seed grasses, turf, pastures, rangeland, and non-crop land. The structure is as below:

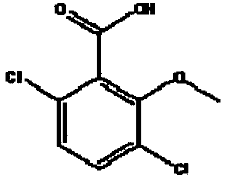

Imazaquin ((RS)-2-(4-isopropyl-4-methyl-5-oxo-2-imidazolin-2-yl)-quinoline-3-carb oxylic acid) is a selective systemic herbicide and uses for pre-planting, pre-emergence or early post-emergence control of broad-leaved weeds in soybean.

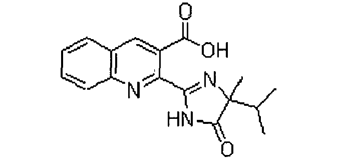

The herbicidal composition comprises an herbicidally effective amount of mesotrione and at least one second herbicidal agent, wherein the second herbicidal agent is (a) imazaquin or a salt thereof and optionally (b) nicosulfuron and/or dicamba or salts thereof. The term "herbicide" as used herein denotes a compound which controls or modifies growth of undesired plants. The term "herbicidally effective amount" indicates the quantity of such a compound or combination of such compounds which is capable of producing a controlling or modifying effect on the growth of undesired plants. Controlling or modifying effects include all deviation from natural development, for example: killing, retardation, leaf burn, albinism, dwarfing and the like. The term "plants" refer to all physical parts of a plant, including seeds, seedlings, saplings, roots, tubers, stems, stalks, foliage and fruits.

In some embodiments of the invention, the ratio of mesotrione and the above-mentioned second herbicidal agent in the herbicidal composition is from 1:50 to 50:1 by weight, preferably from 1:25 to 25:1 by weight, more preferably from 1:10 to 10:1 by weight, for example from 1:5 to 5:1 by weight, from 1:4 to 5:1 by weight, from 1:3 to 5:1 by weight, from 1:2 to 5:1 by weight, from 1:1 to 5:1 by weight, from 1:5 to 3:1 by weight, from 1:4 to 3:1 by weight, from 1:3 to 3:1 by weight, from 1:2 to 3:1 by weight, from 1:1 to 3:1 by weight, from 1:5 to 2:1 by weight, from 1:4 to 2:1 by weight, from 1:3 to 2:1 by weight, from 1:2 to 2:1 by weight, and from 1:1 to 2:1 by weight.

In another embodiment of the invention, the second herbicidal agent in the herbicidal composition is the combination of nicosulfuron and imazaquin, preferably with a ratio of 10:1 to 1: 10 by weight, more preferably 5:1 to 1:5, most preferably 2:1 to 1:2, for example 1:1.

In a further embodiment of the invention, the second herbicidal agent in the herbicidal composition is the combination of dicamba and imazaquin, preferably with a ratio of 10:1 to 1: 10 by weight, more preferably 5:1 to 1:5, most preferably 2:1 to 1:2, for example 1:1.

In another embodiment of the invention, the second herbicidal agent in the herbicidal composition is the combination of nicosulfuron, dicamba, and imazaquin, preferably with a ratio of 1:1:1 by weight.

In some other embodiments, the herbicidal composition further comprises an agriculturally acceptable adjuvant and/or carrier. For example, the adjuvant and/or carrier may include one or more selected from the group consisting of surfactants, safeners, solvents, solid diluents and liquid diluents. More preferably the adjuvant and/or carrier may include one or more selected from the group consisting of alkylpolyglycosides, alkylbetaines, alkyl(amidoalkyl)betaines, alkylamidopropyl dialkylamine, ammonium sulfate, and any combination thereof. More preferably the content of the adjuvant in the herbicidal composition is between 0.01% and 90% by weight, further more preferably between 0.05% and 50% for example between 0.1% and 30% between 1% and 20%. Additional safeners which are useful in this invention comprise 1,8-Naphthalic anhydride (Naphthalene-1,8-dicarboxylic anhydride), Dichlormid (*N,N-*diallyl-2,2-dichloroacetamide), Cyometrinil ((*Z*)-cyanomethoxyimino(phenyl)acetonitrile), Oxabetrinil ((*Z*)-1,3-dioxolan-2-ylmethoxyimino-(phenyl)acetonitrile), Flurazole (Benzyl-2-chloro-4-trifluoromethyl-1,3-thiazole-5-carboxylate, Fenclorim (4,6-Dichloro-2-phenylpyrimidine), Benoxacor ((*RS*)-4-dichloroacetyl-3,4-dihydro-3-methyl-2H-1,4-benzoxazine), Fluxofenim (4-Chloro-2,2,2-trifluoroacetophenone-*O*-1,3-dioxolan-2-ylmethyloxime)

In a further aspect, the invention provides a method of controlling growth of undesirable vegetation in crops, particularly maize (corn), comprising applying to the locus of the undesirable vegetation, a composition comprising an herbicidally effective amount of mesotrione or a salt thereof and (a) imazaquin or a salt thereof and optionally (b) nicosulfuron and/or dicamba or salts thereof.

In some embodiments of this invention, the combined amount of mesotrione and the second herbicidal agent applied to the locus of the undesirable vegetation is between 0.001 kg/ha and 5 kg/ha, preferably between 0.01 kg/ha and 3 kg/ha, more preferably between 0.02 kg/ha and 2 kg/ha, for example between 0.02 kg/ha and 1 kg/ha, between 0.02 kg/ha and 0.5 kg/ha, between 0.02 kg/ha and 0.2 kg/ha, between 0.02 kg/ha and 0.1 kg/ha, between 0.02 kg/ha and 0.08 kg/ha, between 0.04 kg/ha and 2 kg/ha, for example between 0.04 kg/ha and 1 kg/ha, between 0.04 kg/ha and 0.5 kg/ha, between 0.04 kg/ha and 0.2 kg/ha, between 0.04 kg/ha and 0.1 kg/ha, between 0.04 kg/ha and 0.08 kg/ha, between 0.2 kg/ha and 2 kg/ha, between 0.2 kg/ha and 1.5 kg/ha, between 0.2 kg/ha and 1 kg/ha, between 0.2 kg/ha and 0.7 kg/ha, between 0.4 kg/ha and 2 kg/ha, between 0.4 kg/ha and 1.5 kg/ha, between 0.4 kg/ha and 1 kg/ha, and between 0.4 kg/ha and 0.7 kg/ha.

In an embodiment, the second herbicidal agent applied to the locus of the undesirable vegetation is the combination of nicosulfuron and imazaquin, preferably with a ratio of 10:1 to 1: 10 by weight, more preferably 5:1 to 1:5, most preferably 2:1 to 1:2, for example 1:1. In another embodiment, the second herbicidal agent applied to the locus of the undesirable vegetation is the combination of dicamba and imazaquin, preferably with a ratio of 10:1 to 1: 10 by weight, more preferably 5:1 to 1:5, most preferably 2:1 to 1:2, for example 1:1. In another embodiment, the second herbicidal agent applied to the locus of the undesirable vegetation is the combination of nicosulfuron, dicamba, and imazaquin, preferably with a ratio of 1:1:1 by weight.

In some other embodiments, mesotrione and the above-mentioned second herbicidal agent are applied at pre-emergence or post-emergence.

In some other embodiments, mesotrione and the second herbicidal agent are applied together with an adjuvant and/or carrier. Preferably, the adjuvant and/or carrier may include one or more surfactants and/or safeners. More preferably, the adjuvant may include one or more selected from the group consisting of alkylpolyglycosides, alkylbetaines, alkyl(amidoalkyl)betaines, alkylamidopropyl dialkylamine, ammonium sulfate, and any combination thereof. More preferably, the content of the adjuvant is between 0.01% and 50% by weight, further more preferably between 0.05% and 30%, for example between 0.1% and 10%.

In another aspect, the invention also provides use of an herbicidal composition comprising an herbicidally effective amount of mesotrione or a salt thereof and at least one second herbicidal agent, wherein the second herbicidal agent is (a) imazaquin or a salt thereof and optionally (b) nicosulfuron and/or dicamba or salts thereof, controlling growth of undesirable vegetation in crops, particularly maize. For example, the invention may be used to control dicotyledonous weeds such as *Abutilon* spp., *Ambrosia spp., Amaranthus spp., Chenopodium spp., Erysimum spp., Euphorbia spp., Fallopia spp., Galium* spp., *Hydrocotyle* spp., *Ipomoea* spp., *Lamium* spp., *Medicago* spp., *Oxalis* spp., *Plantago* spp., *Polygonum* spp., *Richardia* spp., *Sida* spp., *Sinapis* spp., *Solarium* spp., *Stellaria* spp., *Taraxacum* spp., *Trifolium* spp., *Veronica* spp., *Viola* spp. and *Xanthium* spp.

The invention may also be used to control monocotyledonous weeds such as *Agrostis* spp., *Alopecurus* spp., *Apera* spp., *Avena spp., Brachiaria spp., Bromus spp., Digitaria spp., Echinochloa spp., Eleusine spp., Eriochloa spp., Leptochloa spp., Lolium spp., Ottochloa spp., Panicum* spp., *Paspalum* spp., *Phalaris* spp., *Poa* spp., *Rottboellia* spp., *Setaria* spp., *Sorghum* spp., both intrinsically sensitive as well as resistant (e.g. ACCase and/or ALS resistant) biotypes of any of these grass weeds, as well as broadleaf monocotyledonous weeds such as *Commelina* spp., *Monochoria* spp., *Sagittaria* spp. and sedges such as *Cyperus* spp. and *Scirpus* spp.

As used herein, the term "mesotrione" comprises mesotrione in the form of acid, salts, and metal chelates. Salts of mesotrione include those formed with organic bases (e.g. pyridine, ammonia, or triethylamine) or inorganic bases (e.g. hydrides, hydroxides, or carbonates of sodium, potassium, lithium, calcium, magnesium or barium). Besides containing metal cations such as alkali metal (e.g. sodium, potassium, lithium) and alkaline earth metal (e.g. calcium, magnesium, barium), salts of mesotrione can also include sulfonium, sulfoxonium and quaternary ammonium cations. Salts of mesotrione can be prepared in a number of ways known in the art for preparing salts of acidic organic compounds. For example, metal salts can be made by mixing mesotrione in its acid form with a solution of an alkali or alkaline earth metal salt having a sufficiently basic anion (e.g. hydroxide, alkoxide, carbonate or hydride). Quaternary ammonium salts can be made by similar techniques. Salts of mesotrione can also be prepared by exchange of one cation for another. Cationic exchange can be effected by direct contact on an aqueous solution of a salt of mesotrione (e.g. alkali or quaternary ammonium salt) with a solution containing the cation to be exchanged. The method is most effective when the desired salt containing the exchanged cation is insoluble in water and can be separated by filtration. Exchange may also be effected by passing an aqueous solution of a salt of a compound of mesotrione (e.g. an alkali metal or quaternary ammonium salt) through a column packed with a cation-exchange resin containing the cation to be exchanged for that of the original salt, and the desired product is eluted from the column. This method is particularly useful when the desired salt is water soluble (e.g. potassium, sodium or calcium salt) (examples see patent applications US 2009/0209426 and WO 2007133522). Mesotrione can also be used in the form of metal chelates, such as a copper chelate. Most preferably, the mesotrione is in the form of a copper chelate. Metal chelates of mesotrione and their preparation are known and described in U.S. Patent 5,912,207.

As used herein, the term "locus" is intended to include soil, seeds, and seedlings as well as established vegetation.

The benefits of the present invention are seen most when the pesticidal composition is applied to kill weeds in growing crops of useful plants: such as maize (corn) including field corn, pop corn and sweet corn; cotton wheat, rice, oats, potato sugar beet, plantation crops (such as bananas, fruit trees, rubber trees, tree nurseries), vines, asparagus, bushberries (such as blueberries), caneberries, cranberries, flax, grain sorghum, okra, peppermint, rhubarb, spearmint and sugar cane.

As used herein, the term "crops" are to be understood to include those crops that have been made tolerant to pests and pesticides, including herbicides or classes of herbicides (and, suitably, the herbicides of the present invention), as a result of conventional methods of breeding or genetic engineering. Tolerance to herbicides means a reduced susceptibility to damage caused by a particular herbicide compared to conventional crop breeds. Crops can be modified or bred so as to be tolerant, for example, to HPPD inhibitors such as mesotrione, EPSPS inhibitors such as glyphosate or to glufosinate. It is noted that corn is naturally tolerant to mesotrione.

As used herein the terms "comprises," "comprising," "includes," "including," "has," or "having" are intended to cover a non-exclusive inclusion. For example, a composition, process, method, article, or apparatus that comprises a list of elements is not necessarily limited to only those elements but may include other elements not expressly listed or inherent to such composition, process, method, article, or apparatus. And, the content composition is given by weight, unless the context specifies otherwise.

### Formulation Examples

**Example 1 Water-soluble concentrate (SL)**

| | |
|---|---|
| Mesotrione | 25 g |
| Imazaquin | 5 g |
| TWEEN 80 (sorbitan monooleate ethoxylate) | 10 g |
| Water | balance to 100 g |

**Example 2 Emulsifiable concentrate (EC)**

| | |
|---|---|
| Mesotrione | 50 g |
| Imazaquin | 2.5 g |
| TWEEN 80 (sorbitan monooleate ethoxylate) | 10 g |
| 70B (calcium dodecylphenylsulfonate) | 4 g |
| Solvesso 200 | 10 g |
| N-methyl pyrrolidone | balance to 100 g |

**Example 3 Water-dispersible powder (WP)**

| | |
|---|---|
| Mesotrione | 80 g |
| Imazaquin | 1.6 g |
| Dispersogen 1494 (sodium salt from cresol-formaldehyde condensation) | 5 g |
| Kaolin | balance to 100 g |

**Example 4 Water-dispersible granule (WG)**

| | |
|---|---|
| Mesotrione | 60 g |
| Imazaquin | 6 g |
| Poly vinyl alcohol | 2 g |
| Dispersogen 1494 (sodium salt from cresol-formaldehyde condensation) | 5 g |
| Kaolin | balance to 100 g |

**Example 5 Water-soluble concentrate (SL)**

| | |
|---|---|
| Mesotrione | 2 g |
| Imazaquin | 2 g |
| TWEEN 80 (sorbitan monooleate ethoxylate) | 5 g |
| Water | balance to 100 g |

**Example 6 Water-soluble concentrate (SL)**

| | |
|---|---|
| Mesotrione | 1 g |
| Imazaquin | 50 g |
| TWEEN 80 (sorbitan monooleate ethoxylate) | 10 g |
| Water | balance to 100 g |

**Example 7 Water-dispersible granule (WG)**

| | |
|---|---|
| Mesotrione | 1 g |
| Imazaquin | 20 g |
| Poly vinyl alcohol | 2 g |
| Dispersogen 1494 (sodium salt from cresol-formaldehyde condensation) | 5 g |
| Kaolin | balance to 100 g |

**Example 8 Water-dispersible powder (WP)**

| | |
|---|---|
| Mesotrione | 5 g |
| Imazaquin | 25 g |
| Dispersogen 4387 (anionic polymeric ester) | 5 g |
| Kaolin | balance to 100 g |

**Example 9 Water-soluble concentrate (SL)**

| | |
|---|---|
| Mesotrione | 5g |
| Imazaquin | 10 g |
| TWEEN 80 (sorbitan monooleate ethoxylate) | 10 g |
| Water | Balance to 100 g |

**Example 10 Suspoemulsion (SE)**

| | |
|---|---|
| Mesotrione | 1 g |
| Imazaquin | 10g |
| Solvesso 200 | 20 g |
| TWEEN 80 (sorbitan monooleate ethoxylate) | 10 g |
| Propylene glycol | 5g |
| Xanthan gum | 2 g |
| Water | balance to 100 g |

**Example 11 Oil-in-water emulsion (EW)**

| | |
|---|---|
| Mesotrione | 3 g |
| Imazaquin | 9 g |
| Solvesso 200 | 20 g |
| EL360 (ethoxylated soybean oil) | 5 g |
| 70B (calcium dodecylphenylsulfonate) | 3 g |
| Water | Balance to 100 g |

**Example 12 Water-dispersible powder (WP) comparative example**

| | |
|---|---|
| Mesotrione | 10 g |
| Nicosulfuron | 2 g |
| Dicamba | 20 g |
| Dispersogen 4387 (anionic polymeric ester) | 4 g |
| Kaolin | Balance to 100 g |

**Example 13 Water-dispersible granule (WG) comparative example**

| | |
|---|---|
| Mesotrione | 10 g |
| Nicosulfuron | 20 g |
| Dicamba | 2 g |
| Poly vinyl alcohol | 2 g |
| Dispersogen 1494 (sodium salt from cresol-formaldehyde condensation) | 2 g |
| Silicon | Balance to 100 g |

**Example 14 Oil-in-water emulsion (EW) comparative example**

| | |
|---|---|
| Mesotrione | 10 g |
| Nicosulfuron | 5 g |
| Dicamba | 1 g |
| Solvesso 200 | 20 g |
| EL360 (ethoxylated soybean oil) | 5 g |
| 70B (calcium dodecylphenylsulfonate) | 3 g |
| Water | Balance to 100 g |

**Example 15 Suspoemulsion (SE) comparative example**

| | |
|---|---|
| Mesotrione | 10 g |
| Nicosulfuron | 1 g |
| Dicamba | 5 g |
| Solvesso 200 | 20 g |
| TWEEN 80 (sorbitan monooleate ethoxylate) | 5 g |
| Propylene glycol | 5 g |
| Xanthan gum | 2 g |
| Water | Balance to 100 g |

**Example 16 Emulsion concentrate (EC) comparative example**

| | |
|---|---|
| Mesotrione | 10 g |
| Nicosulfuron | 20 g |
| Dicamba | 10 g |
| N-methyl pyrrolidione | 20 g |
| EL360 (ethoxylated soybean oil) | 8 g |
| 70B (calcium dodecylphenylsulfonate) | 4 g |
| Solvesso 200 | Balance to 100 g |

**Example 17 Emulsion concentrate (EC)**

| | |
|---|---|
| Mesotrione | 10 g |
| Nicosulfuron | 3 g |
| Imazaquin | 6 g |
| N-methyl pyrrolidione | 20 g |
| EL360 (ethoxylated soybean oil) | 5 g |
| 70B (calcium dodecylphenylsulfonate) | 3 g |
| Solvesso 200 | Balance to 100 g |

**Example 18 Emulsion concentrate (EC)**

| | |
|---|---|
| Mesotrione | 20 g |
| Nicosulfuron | 5 g |
| Imazaquin | 1 g |
| EL360 (ethoxylated soybean oil) | 5 g |
| 70B (calcium dodecylphenylsulfonate) | 3 g |
| Solvesso 200 | Balance to 100 g |

**Example 19 Water-dispersible granule (WG)**

| | |
|---|---|
| Mesotrione | 20 g |
| Nicosulfuron | 20 g |
| Imazaquin | 2 g |
| Poly vinyl alcohol | 2 g |
| Dispersogen 1494 (sodium salt from cresol-formaldehyde condensation) | 4 g |
| Kaolin | Balance to 100 g |

**Example 20 Water-dispersible powder (WP)**

| | |
|---|---|
| Mesotrione | 20 g |
| Nicosulfuron | 2 g |
| Imazaquin | 20 g |
| Dispersogen 1494 (sodium salt from cresol-formaldehyde condensation) | 4 g |
| Silicon | Balance to 100 g |

**Example 21 Emulsion concentrate (EC)**

| | |
|---|---|
| Mesotrione | 10 g |
| Nicosulfuron | 3 g |
| Imazaquin | 15 g |
| N-methyl pyrrolidione | 20 g |
| EL360 (ethoxylated soybean oil) | 5 g |
| 70B (calcium dodecylphenylsulfonate) | 3 g |
| Solvesso 200 | Balance to 100 g |

**Example 22 Water-dispersible powder (WP)**

| | |
|---|---|
| Mesotrione | 20 g |
| Nicosulfuron | 10 g |
| Imazaquin | 5 g |
| Dispersogen 1494 (sodium salt from cresol-formaldehyde condensation) | 4 g |
| Silicon | Balance to 100 g |

**Example 23 Emulsion concentrate (EC)**

| | |
|---|---|
| Mesotrione | 10 g |
| Dicamba | 3 g |
| Imazaquin | 6 g |
| N-methyl pyrrolidione | 20 g |
| EL360 (ethoxylated soybean oil) | 5 g |
| 70B (calcium dodecylphenylsulfonate) | 3 g |
| Solvesso 200 | Balance to 100 g |

**Example 24 Emulsion concentrate (EC)**

| | |
|---|---|
| Mesotrione | 20 g |
| Dicamba | 5 g |
| Imazaquin | 1 g |
| EL360 (ethoxylated soybean oil) | 5 g |
| 70B (calcium dodecylphenylsulfonate) | 3 g |
| Solvesso 200 | Balance to 100 g |

**Example 25 Water-dispersible granule (WG)**

| | |
|---|---|
| Mesotrione | 20 g |
| Dicamba | 20 g |
| Imazaquin | 2 g |
| Poly vinyl alcohol | 2 g |
| Dispersogen 1494 (sodium salt from cresol-formaldehyde condensation) | 4 g |
| Kaolin | Balance to 100 g |

**Example 26 Water-dispersible powder (WP)**

| | |
|---|---|
| Mesotrione | 20 g |
| Dicamba | 2 g |
| Imazaquin | 20 g |
| Dispersogen 1494 (sodium salt from cresol-formaldehyde condensation) | 4 g |
| Silicon | Balance to 100 g |

**Example 27 Emulsion concentrate (EC)**

| | |
|---|---|
| Mesotrione | 10 g |
| Dicamba | 3 g |
| Imazaquin | 15 g |
| N-methyl pyrrolidione | 20 g |
| EL360 (ethoxylated soybean oil) | 5 g |
| 70B (calcium dodecylphenylsulfonate) | 3 g |
| Solvesso 200 | Balance to 100 g |

**Example 28 Water-dispersible powder (WP)**

| | |
|---|---|
| Mesotrione | 20 g |
| Dicamba | 10 g |
| Imazaquin | 5 g |
| Dispersogen 1494 (sodium salt from cresol-formaldehyde condensation) | 4 g |
| Silicon | Balance to 100 g |

**Example 29 Water-dispersible granule (WG)**

| | |
|---|---|
| Mesotrione | 20 g |
| Nicosulfuron | 10 g |
| Dicamba | 10 g |
| Imazaquin | 10 g |
| Poly vinyl alcohol | 2 g |
| Dispersogen 1494 (sodium salt from cresol-formaldehyde condensation) | 4 g |
| Kaolin | Balance to 100 g |

### Biological Examples

examples 12 to 16 are comparative examples

### Field evaluation 1

The samples according to Examples 1 to 29 were applied (at the rates listed in Table 1 below) at pre-emergence to aluminum flats (measuring 16 × 23 × 7 cm deep) containing loam soil in which the following species had been sown: *Abutilon, Ambrosia, Amaranthus, Chenopodium, Agrostis, Alopecurus, Apera, Avena* and corn. The soil was fortified with fertilizer and treated with a fungicide, Captan 80W, prior to seeding. All of the herbicides were applied at pre-emergence with the carrier volume of 234 L/ha.

After application of the compositions according to the present invention, the flats were placed in a greenhouse. Injury to plants was rated at 8 and 27 days after treatment ("DAT"). Injury was evaluated as percent control, with percent control being the total injury to the plants due to all factors including inhibited emergence, stunting, malformation, albinism, chlorosis, and other types of plant injury. The control ratings range from 0 to 100 percent, where 0% represents no effect with growth compared with the untreated control and where 100% represents complete kill.

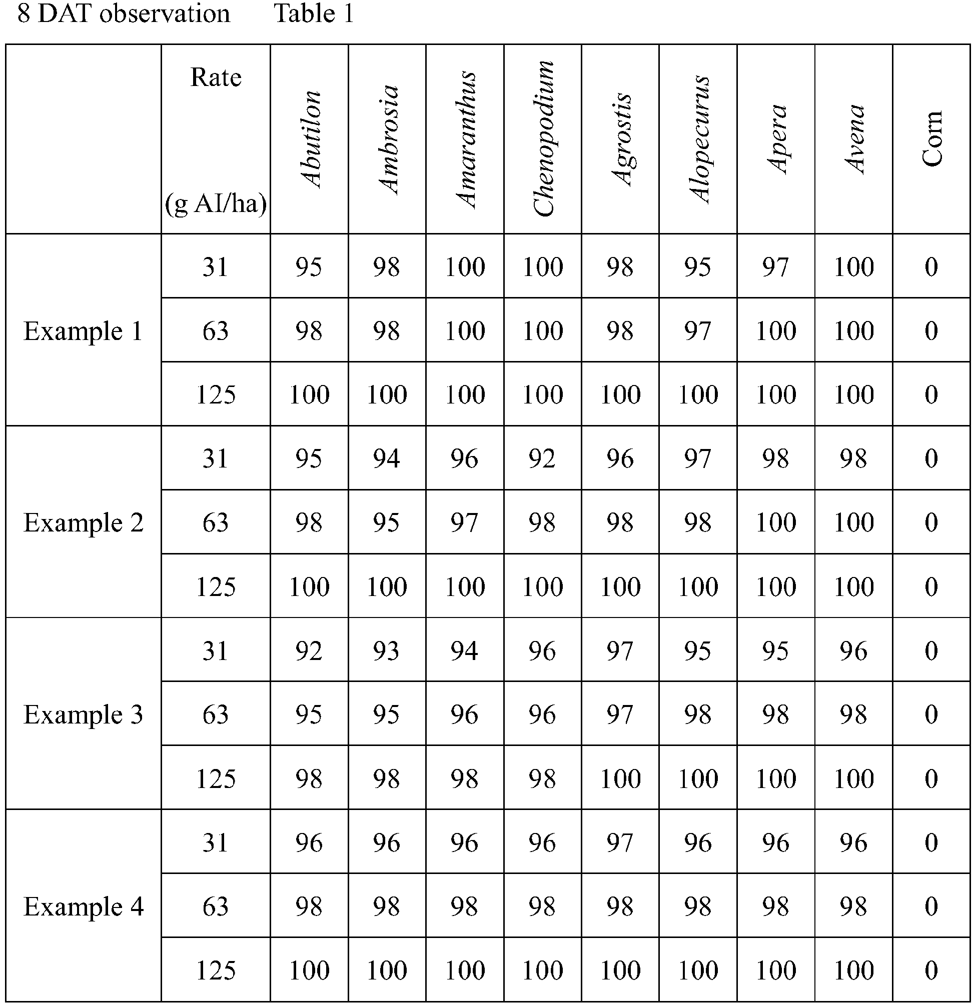

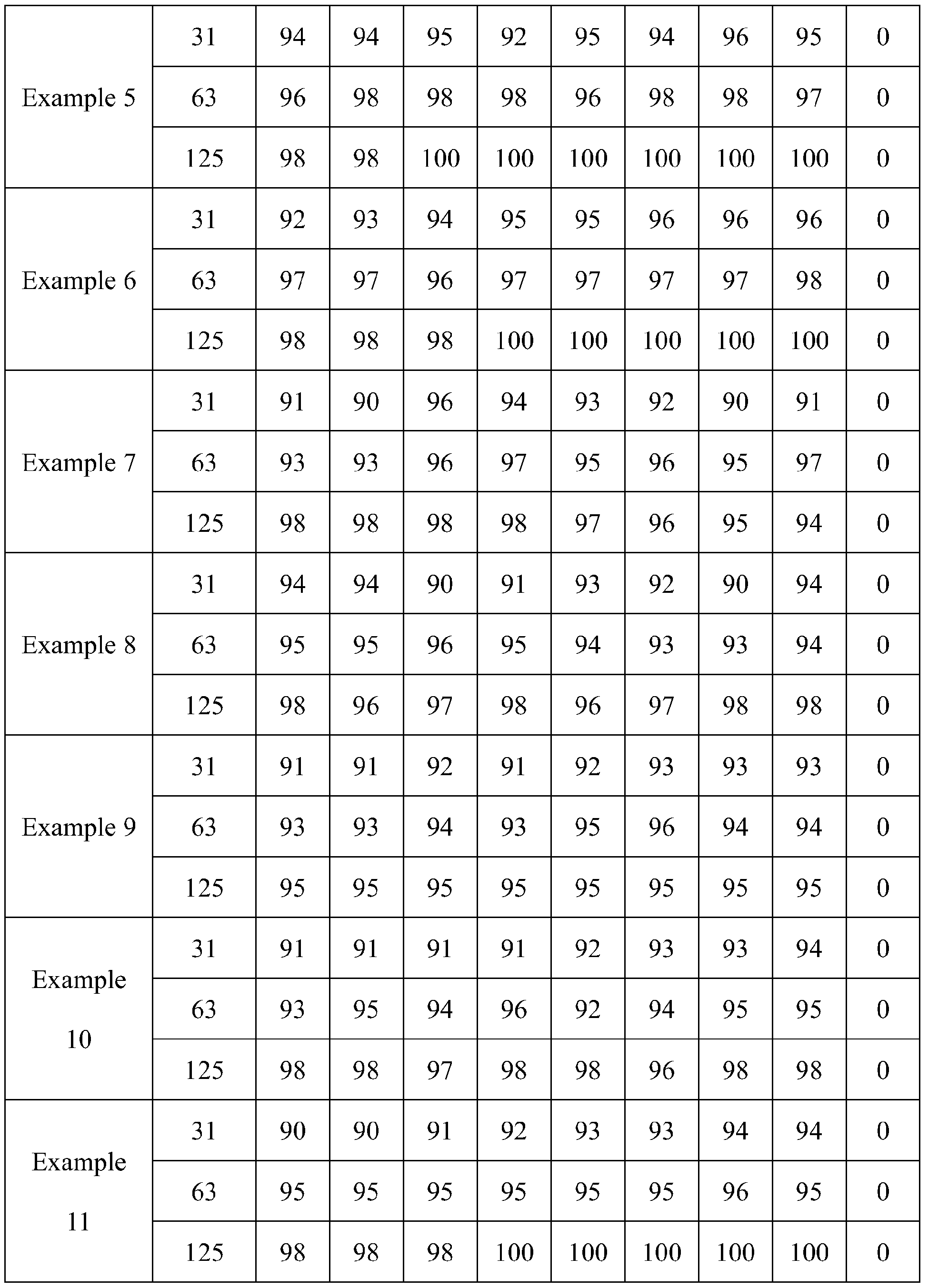

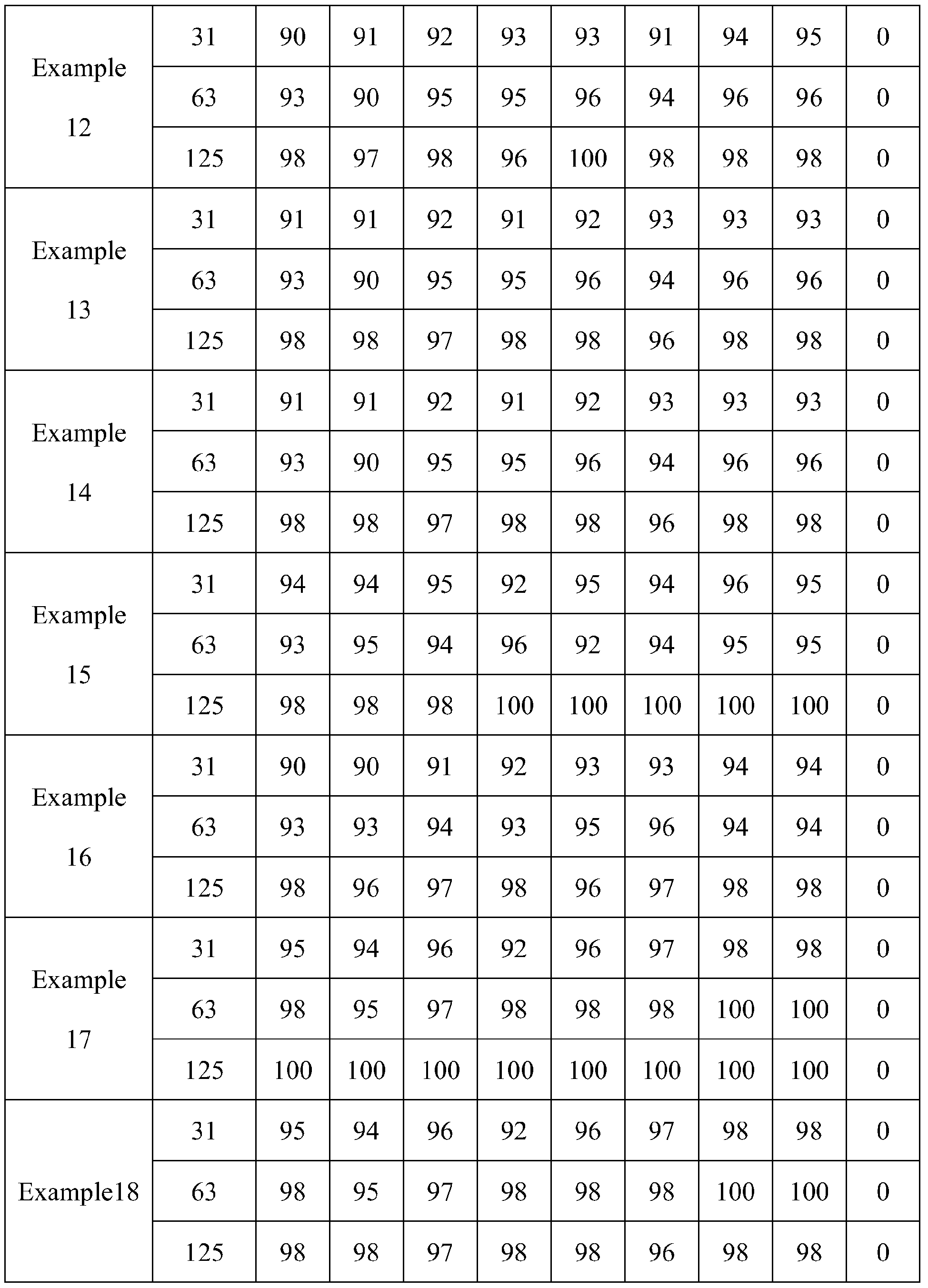

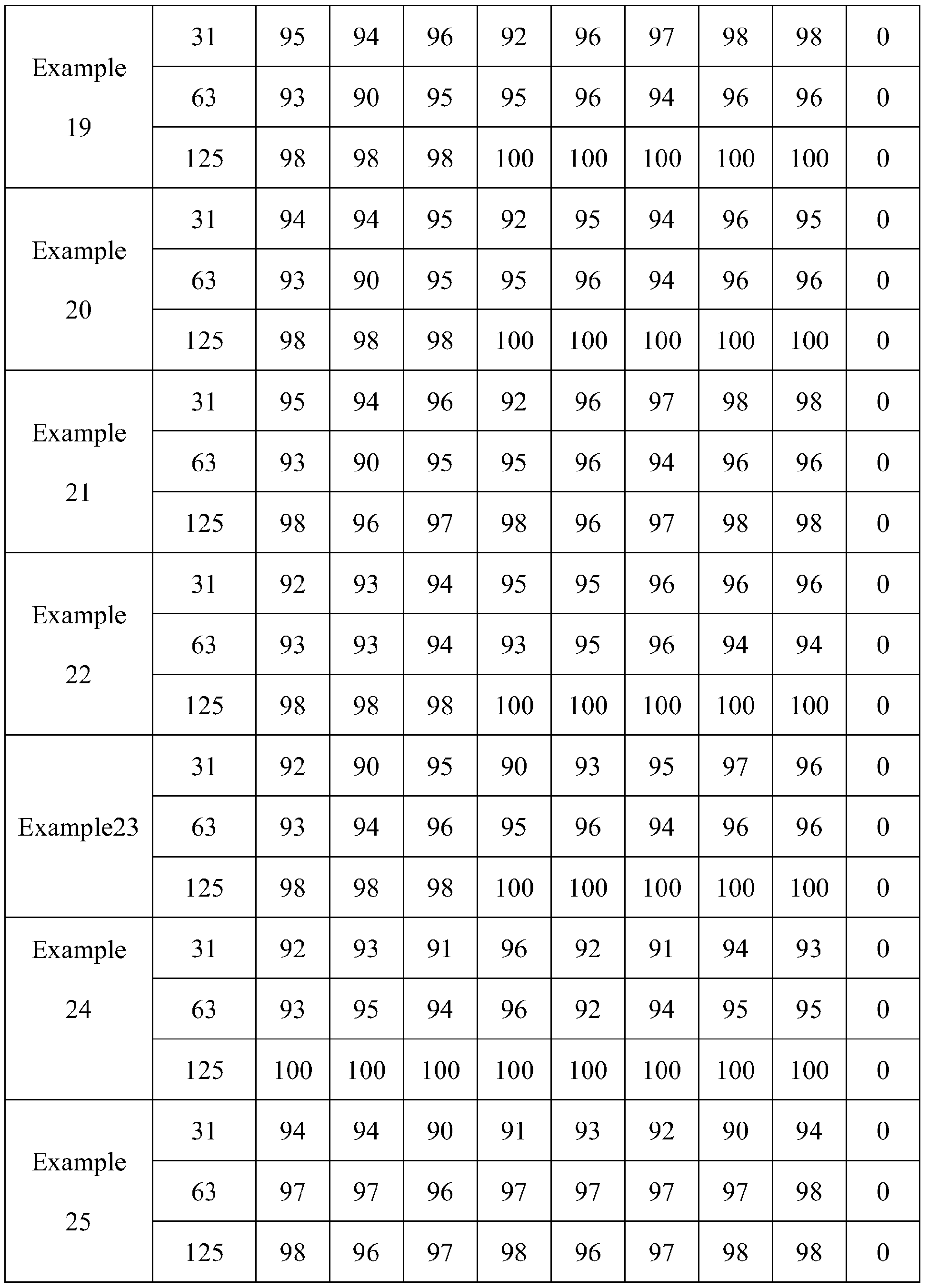

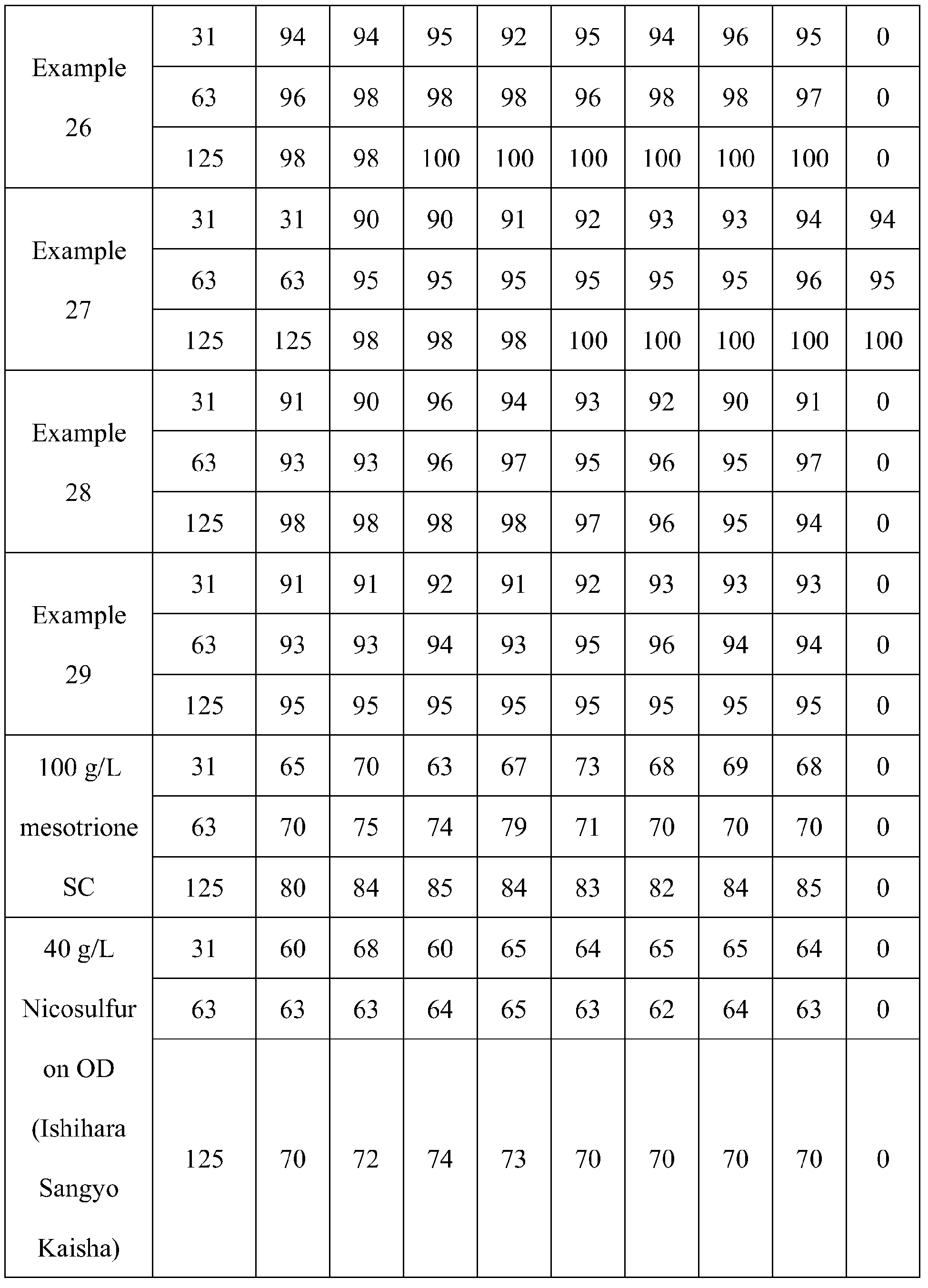

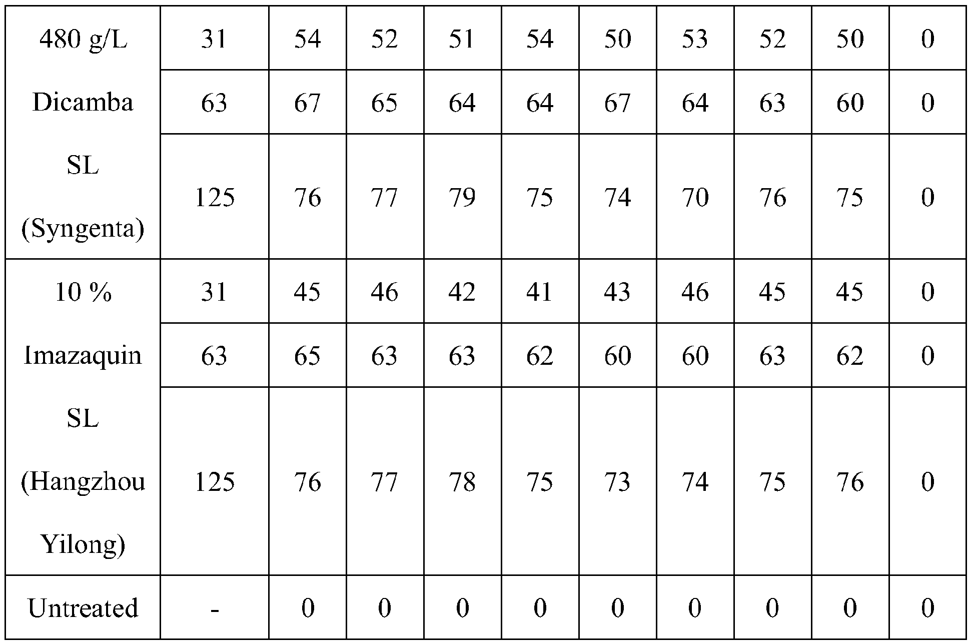

The above results indicated unexpected corn selectivity of the premix and high efficacy to dicotyledonous and monocotyledonous weeds.

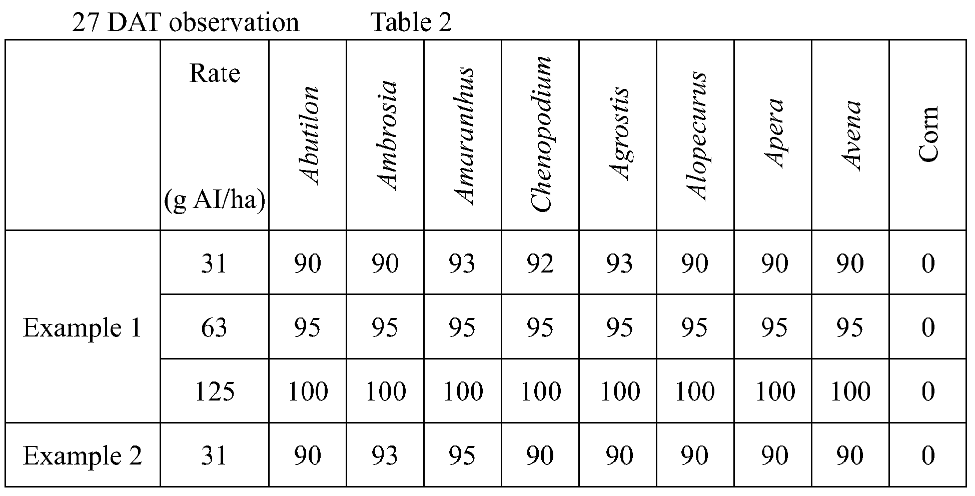

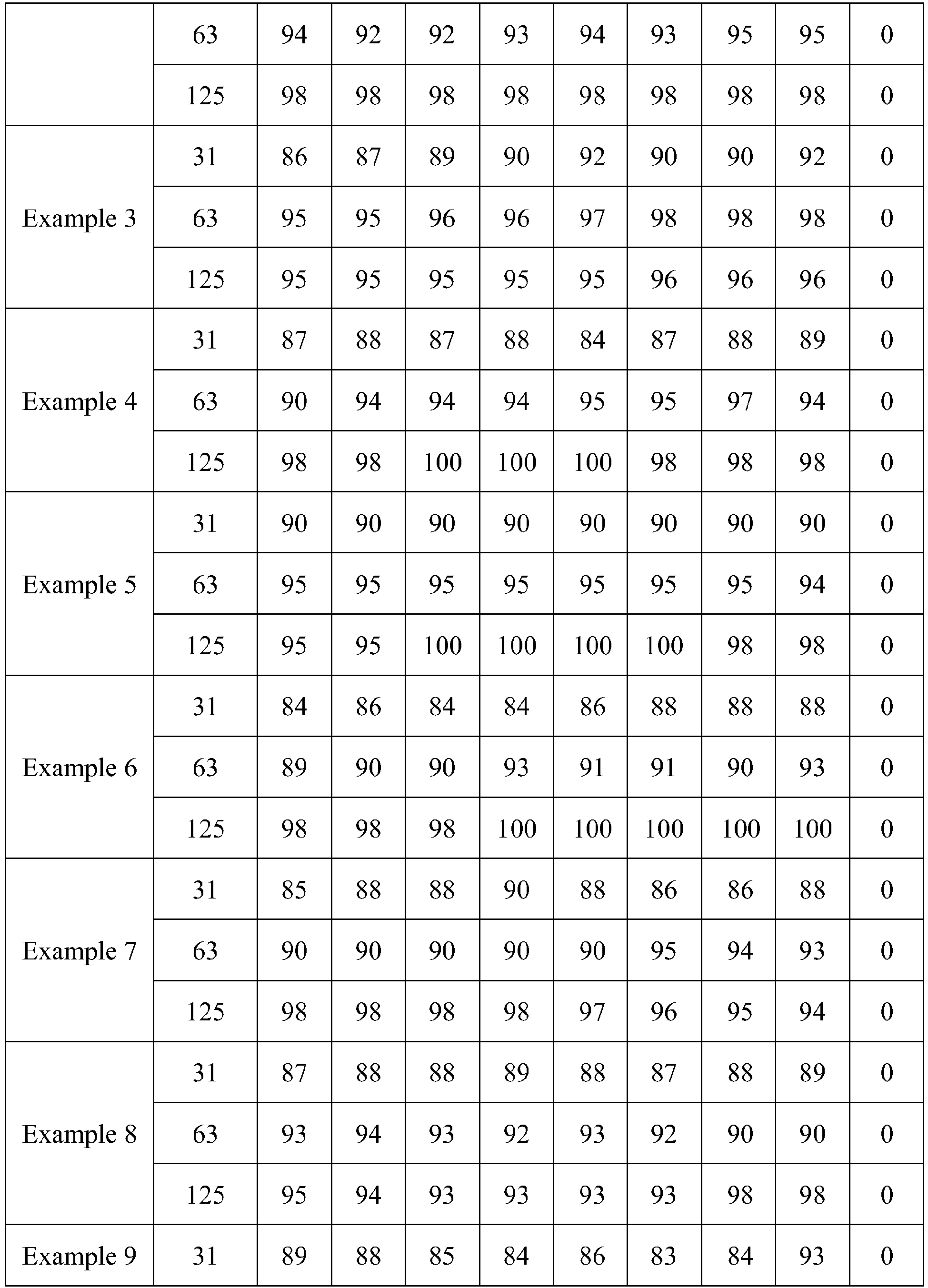

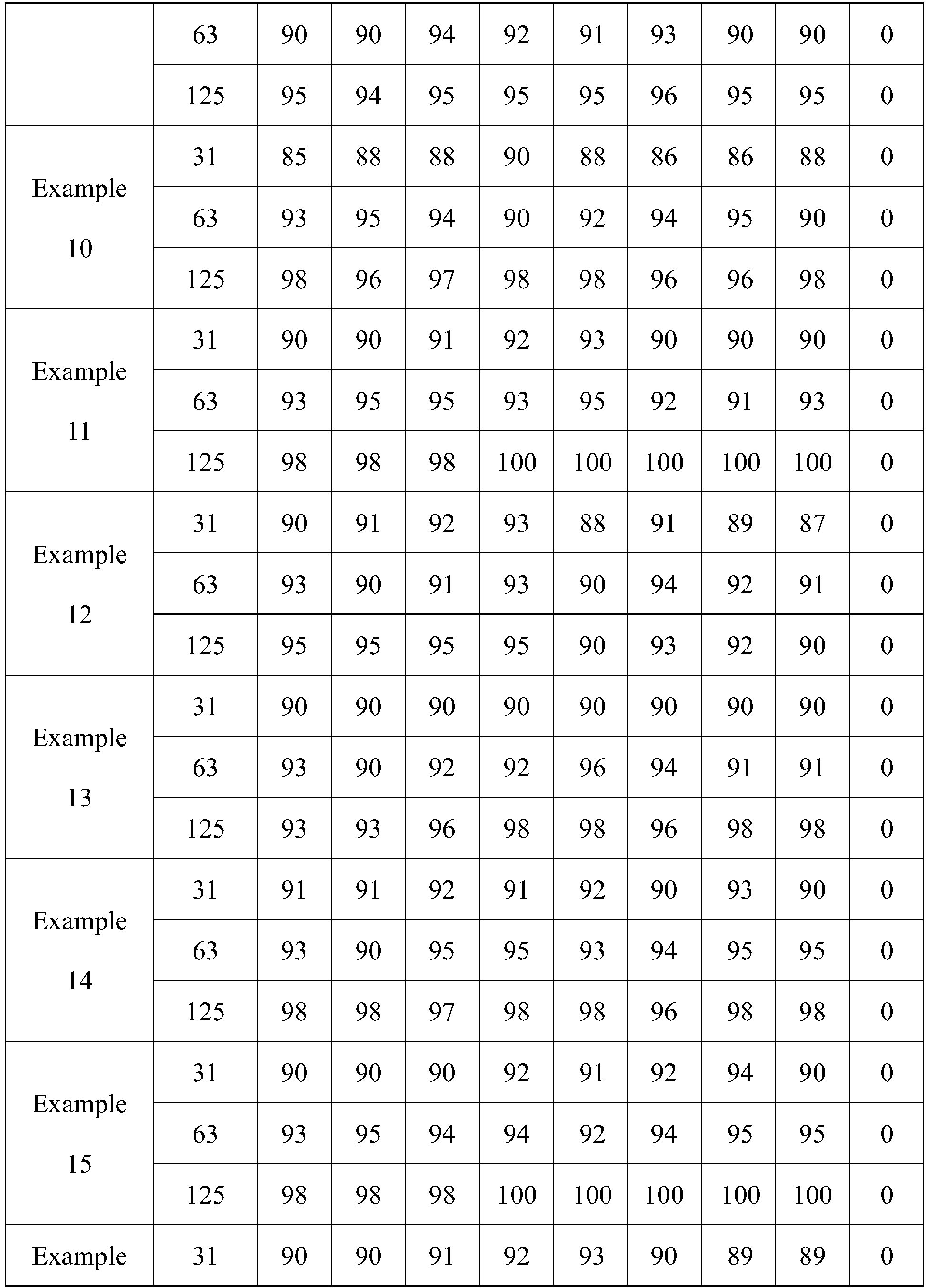

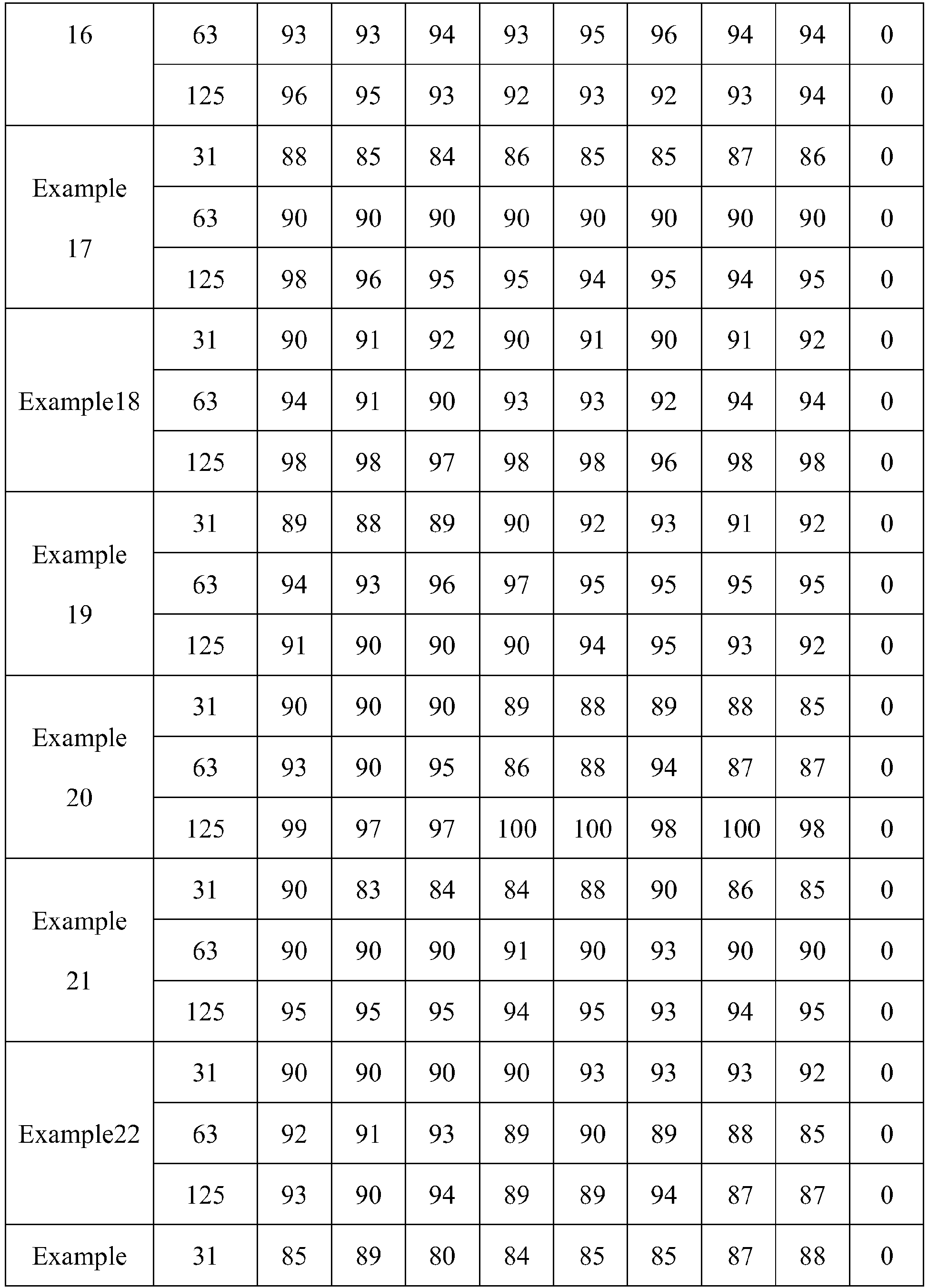

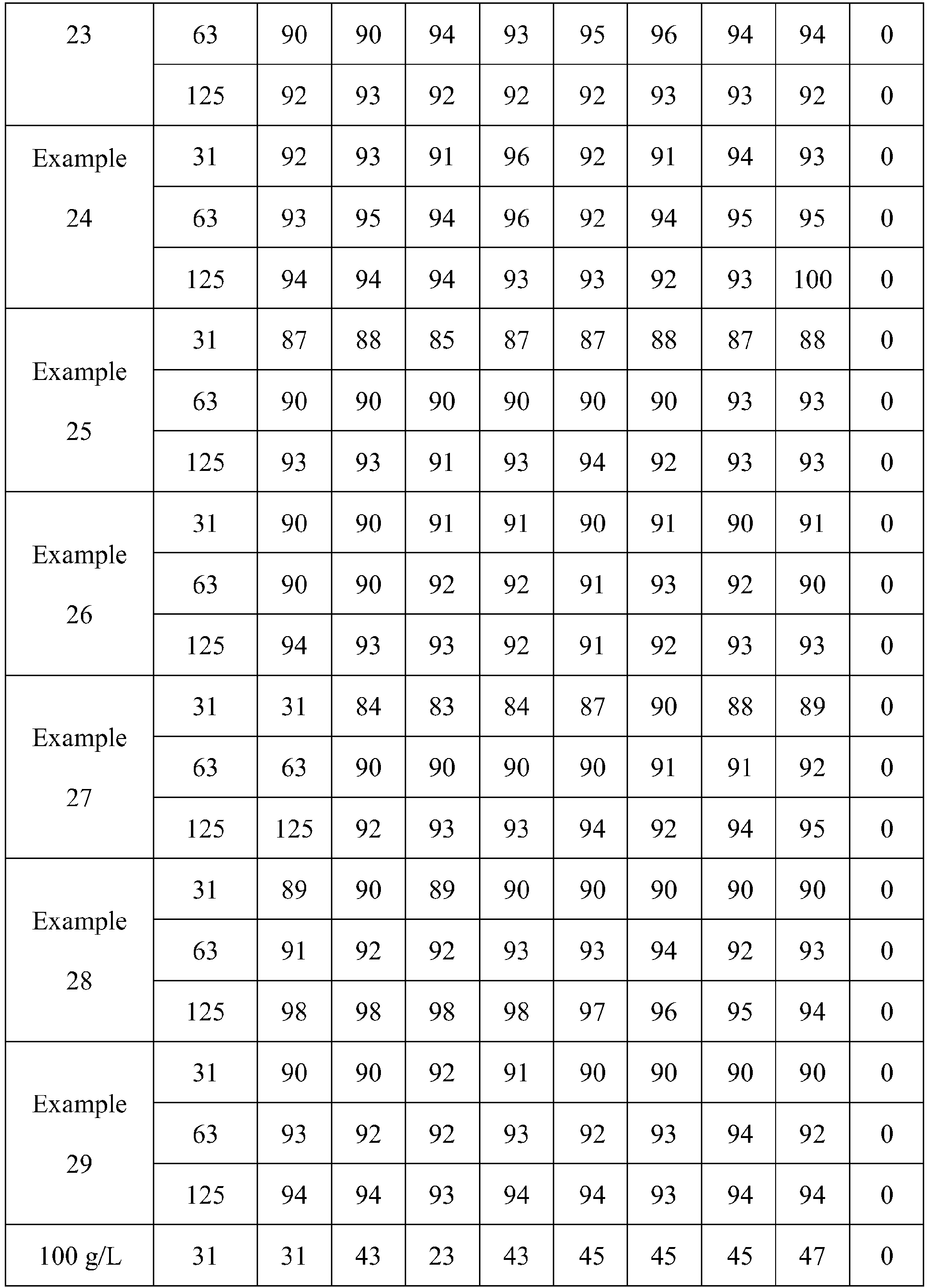

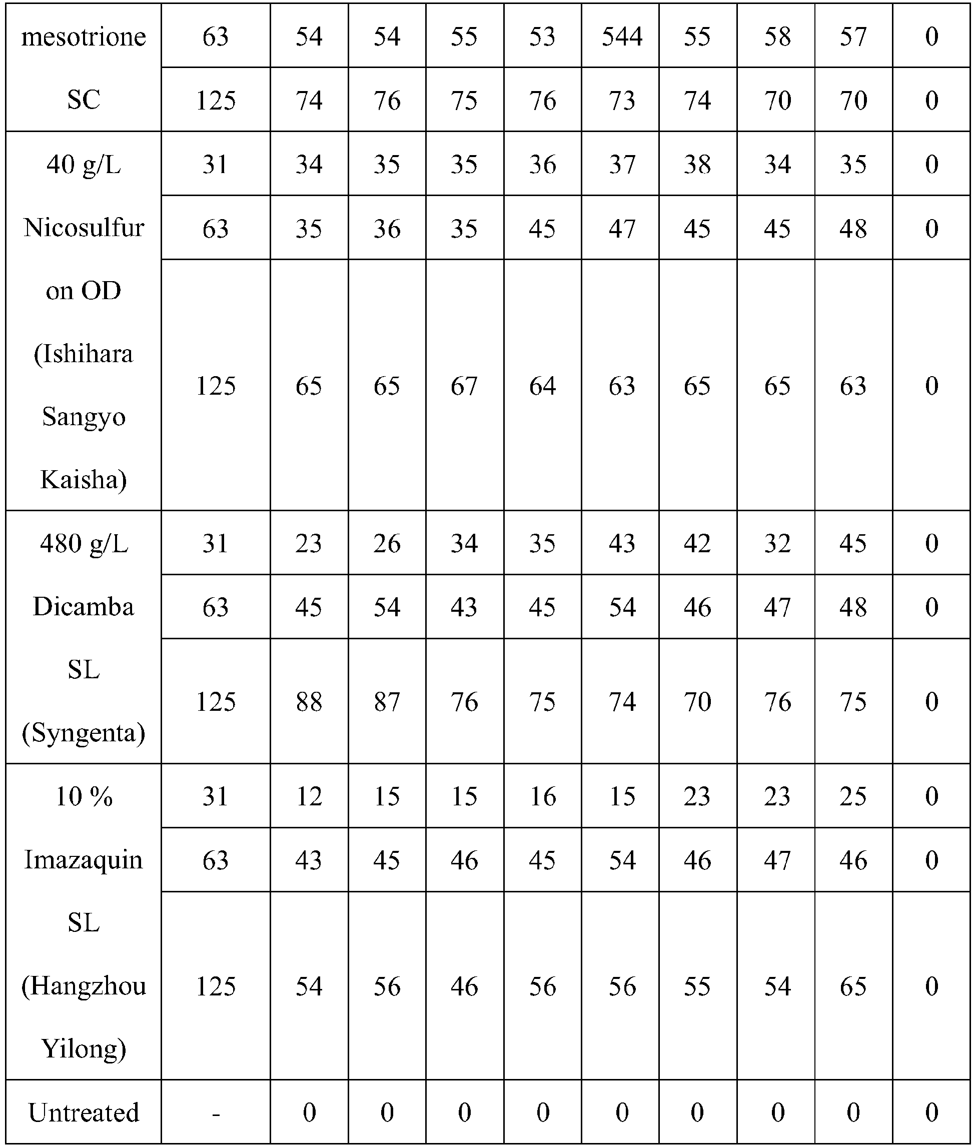

The above results indicated unexpected corn selectivity of the premix, high efficacy to dicotyledonous and monocotyledonous weeds and long pesticide duration.

### Field evaluation 2

Seeds of plant species *Abutilon, Ambrosia, Amaranthus, Chenopodium, Agrostis, Alopecurus, Apera, Avena* and corn were sown in aluminum flats containing soil comprising of 2 parts sandy loam and 1 part peat. Twelve days after seeding, the samples according to Examples 1 to 29 were applied (at the rates listed in Table 3) at post-emergence. The flats were placed in a greenhouse and injury to plants evaluated at 17 days after treatment.

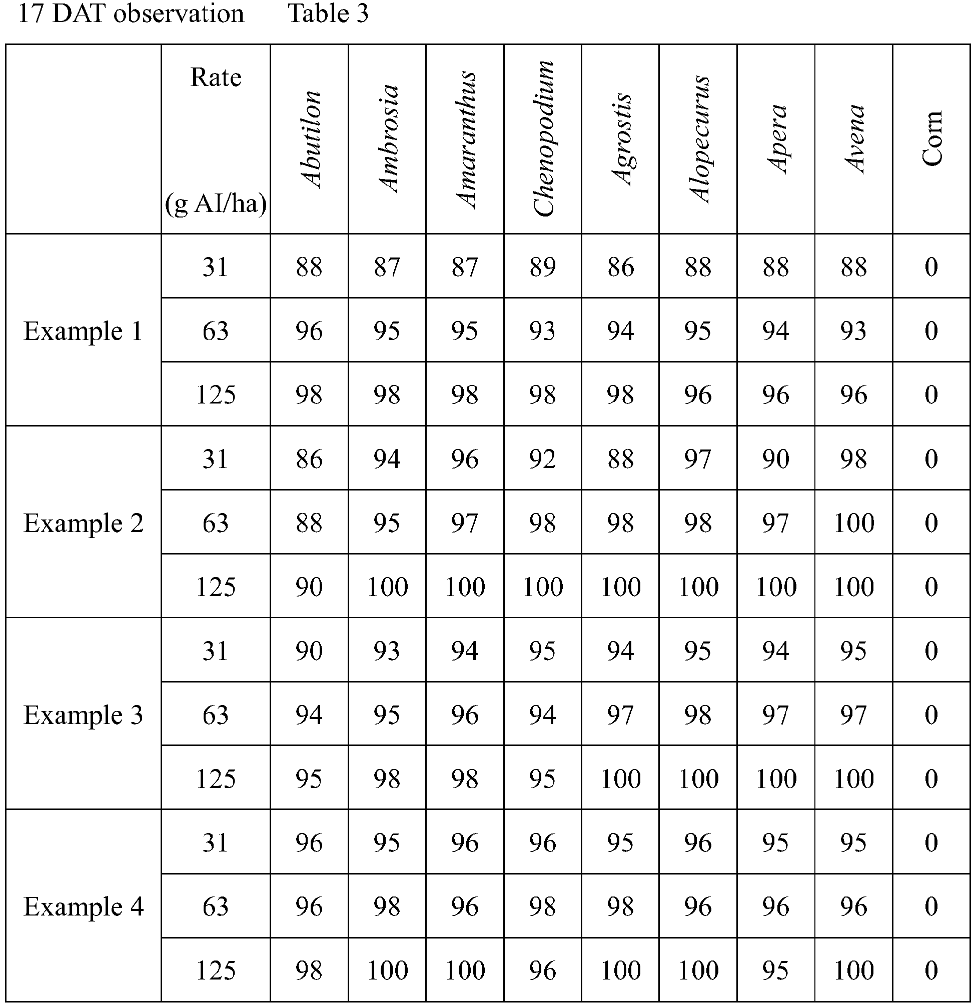

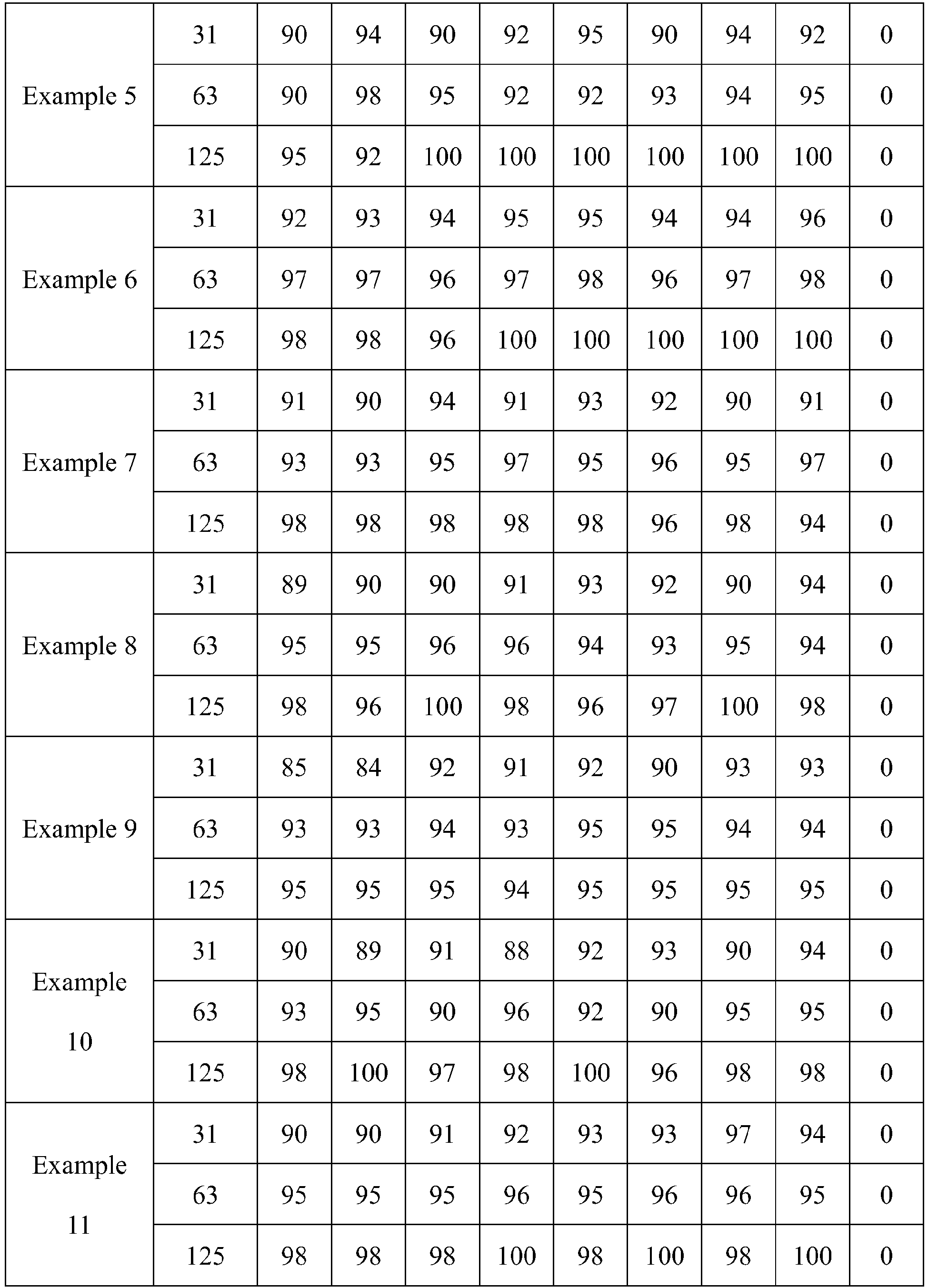

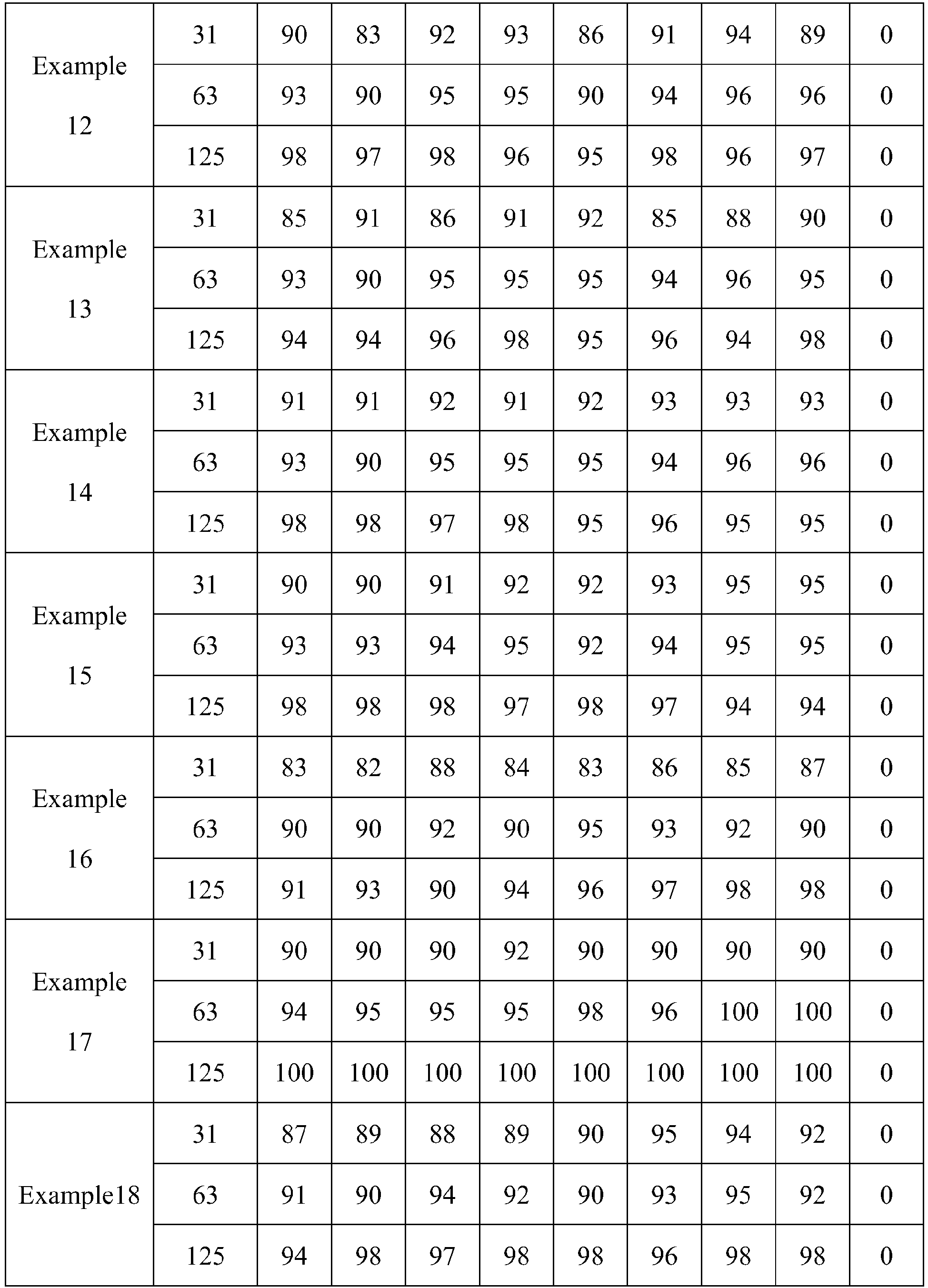

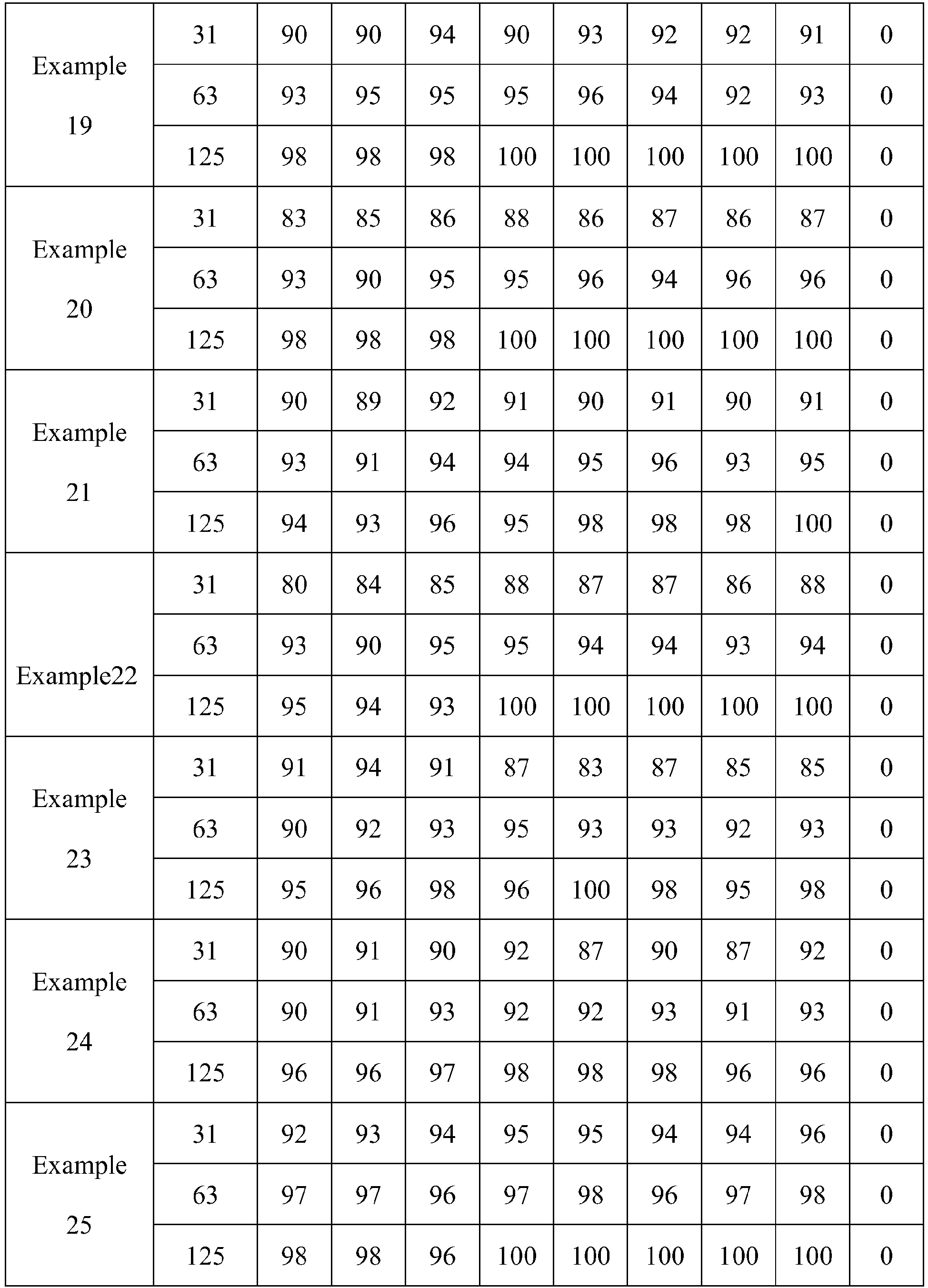

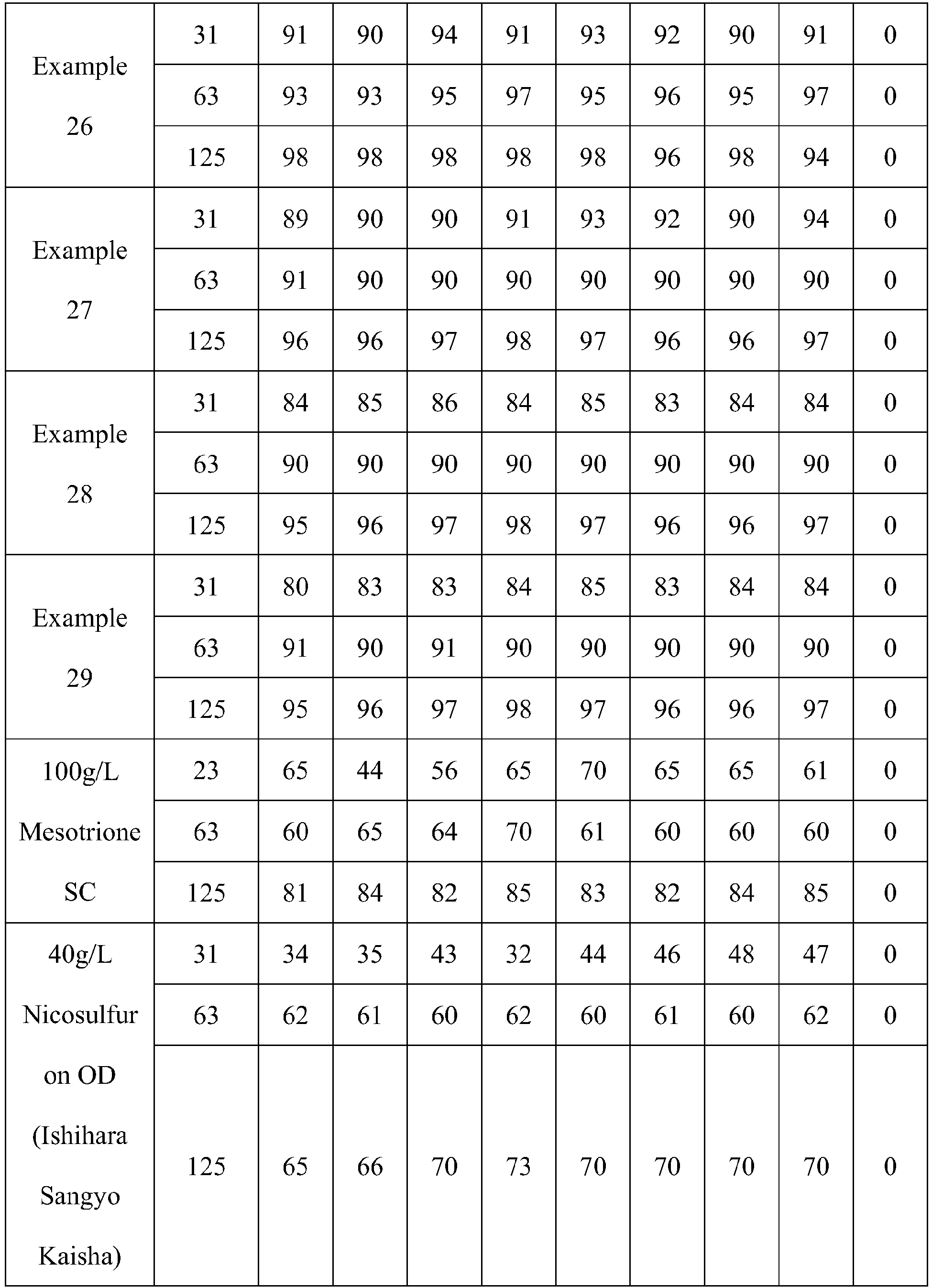

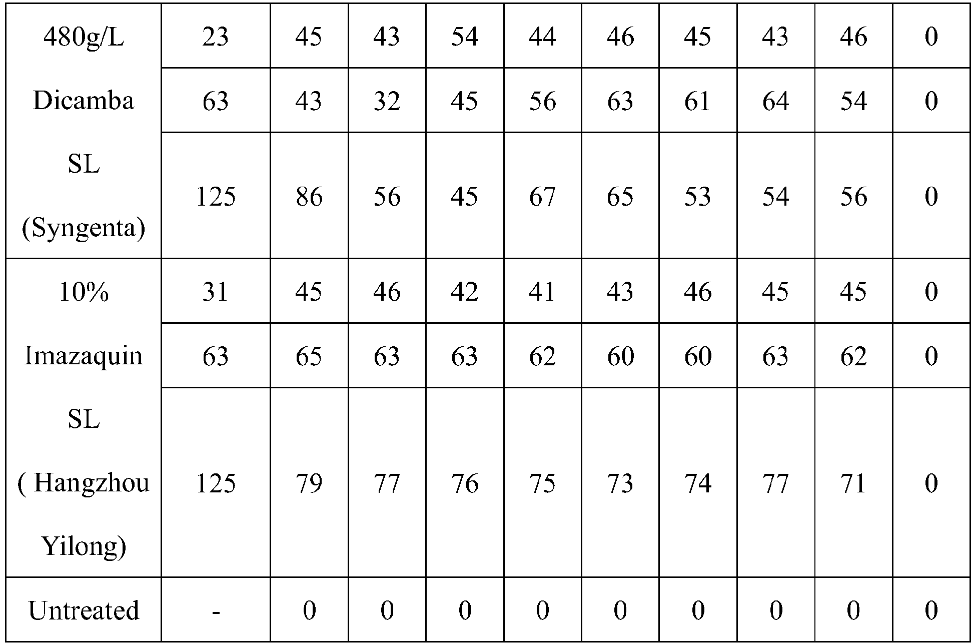

The above results indicated unexpected corn selectivity of the premix, high efficacy to dicotyledonous and monocotyledonous weeds and long pesticide duration.

## Claims

1. Herbicidal composition comprising an herbicidally effective amount of mesotrione or a salt thereof and at least one second herbicidal agent, wherein the second herbicidal agent is (a) imazaquin or a salt thereof and optionally (b) nicosulfuron and/or dicamba or salts thereof.

2. The herbicidal composition according to claim 1, wherein the ratio of mesotrione and the second herbicidal agent is from 1:20 to 20:1.

3. The herbicidal composition according to claim 1 or 2, wherein the second herbicidal agent is the combination of both nicosulfuron and imazaquin.

4. The herbicidal composition according to claim 3, wherein nicosulfuron and imazaquin are present in a ratio of 5:1 to 1:5 by weight.

5. The herbicidal composition according to claim 1 or 2, wherein the second herbicidal agent is the combination of dicamba and imazaquin.

6. The herbicidal composition according to claim 5, wherein dicamba and imazaquin are present in a ratio of 5:1 to 1:5 by weight.

7. The herbicidal composition according to claim 1 or 2, wherein the second herbicidal agent is the combination of nicosulfuron, dicamba, and imazaquin.

8. The herbicidal composition according to claim 7, wherein nicosulfuron, dicamba and imazaquin are present in a ratio of 1:1:1 by weight.

9. The herbicidal composition according to any one of claims 1 to 6, wherein the herbicidal composition further comprises an adjuvant and/or carrier.

10. The herbicidal composition according to claim 9, wherein the adjuvant and/or carrier includes one or more surfactants and/or safeners selected from the group consisting of alkylpolyglycosides, alkylbetaines, alkyl(amidoalkyl)betaines, alkylamidopropyl dialkylamine, ammonium sulfate, and any combination thereof, the content of the adjuvant being between 0.01% and 90% by weight.

11. A method of controlling growth of undesirable vegetation in crops, comprising applying to the locus of the undesirable vegetation, a herbicidally effective amount of the herbicidal composition according to any one of claims 1 to 10.

12. The method of claim 11, wherein the crop is maize (corn).

13. Use of mesotrione or a salt thereof and at least one second herbicidal agent, wherein the second herbicidal agent is (a) imazaquin or a salt thereof and optionally (b) nicosulfuron and/or dicamba or salts thereof. in controlling growth of undesirable vegetation in crops.

## Patentansprüche

1. Herbizidzusammensetzung, die eine herbizid wirksame Menge von Mesotrion oder einem Salz davon und wenigstens ein zweites Herbizidmittel beinhaltet, wobei das zweite Herbizidmittel (a) Imazaquin oder ein Salz davon und optional (b) Nicosulfuron und/oder Dicamba oder Salze davon ist.

2. Herbizidzusammensetzung nach Anspruch 1, wobei das Verhältnis zwischen Mesotrion und dem zweiten Herbizidmittel 1:20 bis 20:1 beträgt.

3. Herbizidzusammensetzung nach Anspruch 1 oder 2, wobei das zweite Herbizidmittel die Kombination von Nicosulfuron und Imazaquin ist.

4. Herbizidzusammensetzung nach Anspruch 3, wobei Nicosulfuron und Imazaquin in einem Verhältnis von 5:1 bis 1:5 nach Gewicht vorliegen.

5. Herbizidzusammensetzung nach Anspruch 1 oder 2, wobei das zweite Herbizidmittel die Kombination von Dicamba und Imazaquin ist.

6. Herbizidzusammensetzung nach Anspruch 5, wobei Dicamba und Imazaquin in einem Verhältnis von 5:1 bis 1:5 nach Gewicht vorliegen.

7. Herbizidzusammensetzung nach Anspruch 1 oder 2, wobei das zweite Herbizidmittel die Kombination von Nicosulfuron, Dicamba und Imazaquin ist.

8. Herbizidzusammensetzung nach Anspruch 7, wobei Nicosulfuron, Dicamba und Imazaquin in einem Verhältnis von 1:1:1 nach Gewicht vorliegen.

9. Herbizidzusammensetzung nach einem der Ansprüche 1 bis 6, wobei die Herbizidzusammensetzung ferner ein Adjuvans und/oder einen Träger beinhaltet.

10. Herbizidzusammensetzung nach Anspruch 9, wobei das Adjuvans und/oder der Träger ein oder mehrere Tenside und/oder Safener enthält, ausgewählt aus der Gruppe bestehend aus Alkylpolyglycosiden, Alkylbetainen, Alkyl(amidoalkyl)betainen, Alkylamidopropyldialkylamin, Ammoniumsulfat und einer beliebigen Kombination davon, wobei der Gehalt des Adjuvans zwischen 0,01 und 90 Gew.-% liegt.

11. Verfahren zum Kontrollieren des Wachstums von unerwünschter Vegetation in Kulturpflanzen, das das Aufbringen einer herbizid wirksamen Menge der Herbizidzusammensetzung nach einem der Ansprüche 1 bis 10 auf den Ort der unerwünschten Vegetation beinhaltet.

12. Verfahren nach Anspruch 11, wobei die Kulturpflanze Mais ist.

13. Verwendung von Mesotrion oder einem Salz davon und wenigstens einem zweiten Herbizidmittel, wobei das zweite Herbizidmittel (a) Imazaquin oder ein Salz davon und optional (b) Nicosulfuron und/oder Dicamba oder Salze davon ist, zur Kontrolle des Wachstums von unerwünschter Vegetation in Kulturpflanzen.

## Revendications

1. Composition herbicide comprenant une quantité à effet herbicide de mésotrione ou d'un de ses sels et d'au moins un second agent herbicide, dans laquelle le second agent herbicide est (a) l'imazaquine ou l'un de ses sels et éventuellement (b) le nicosulfuron et/ou le dicamba ou son/leurs sel(s).

2. Composition herbicide selon la revendication 1, dans laquelle le rapport entre le mésotrione et le second agent herbicide est de 1:20 à 20:1.

3. Composition herbicide selon la revendication 1 ou 2, dans laquelle le second agent herbicide consiste en la combinaison à la fois du nicosulfuron et de l'imazaquine.

4. Composition herbicide selon la revendication 3, dans laquelle le nicosulfuron et l'imazaquine sont présents dans un rapport pondéral de 5:1 à 1:5.

5. Composition herbicide selon la revendication 1 ou 2, dans laquelle le second agent herbicide consiste en la combinaison de dicamba et d'imazaquine.

6. Composition herbicide selon la revendication 5, dans laquelle le dicamba et l'imazaquine sont présents dans un rapport pondéral de 5:1 à 1:5.

7. Composition herbicide selon la revendication 1 ou 2, dans laquelle le second agent herbicide consiste en la combinaison du nicosulfuron, du dicamba et de l'imazaquine.

8. Composition herbicide selon la revendication 7, dans laquelle le nicosulfuron, le dicamba et l'imazaquine sont présents dans un rapport pondéral de 1:1:1.

9. Composition herbicide selon l'une quelconque des revendications 1 à 6, dans laquelle la composition herbicide comprend en outre un adjuvant et/ou support.

10. Composition herbicide selon la revendication 9, dans laquelle l'adjuvant et/ou le support inclut ou incluent un ou plusieurs tensioactif(s) et/ou phytoprotecteur(s) choisi(s) dans le groupe composé d'alkylpolyglycosides, d'alkylbétaïnes, d'alkyl(amidoalkyl)bétaïnes, d'alkylamidopropyldialkylamine, de sulfate d'ammonium et de l'une quelconque de leurs combinaisons, la teneur en adjuvant étant comprise entre 0,01 % et 90 % en poids.

11. Procédé pour lutter contre la croissance d'une végétation indésirable dans des cultures, comprenant l'application au site de la végétation indésirable, d'une quantité à effet herbicide de la composition herbicide selon l'une quelconque des revendications 1 à 10.

12. Procédé selon la revendication 11, dans lequel la culture est le maïs.

13. Utilisation de mésotrione ou d'un de ses sels et d'au moins un second agent herbicide, dans laquelle le second agent herbicide est (a) l'imazaquine ou l'un de ses sels et éventuellement (b) le nicosulfuron et/ou le dicamba ou son/leurs sel(s) dans la lutte contre la croissance d'une végétation indésirable dans des cultures.
